Europäisches Patentamt

European Patent Office

Office européen des brevets

(11) Publication number: **0 100 221**
A2

# EUROPEAN PATENT APPLICATION

(21) Application number: 83304272.4

(51) Int. Cl.³: **F 15 B 15/10**

(22) Date of filing: 22.07.83

(30) Priority: 26.07.82 US 401875

(43) Date of publication of application: 08.02.84
Bulletin 84/6

(84) Designated Contracting States: DE FR GB SE

(71) Applicant: ROBERTSHAW CONTROLS COMPANY,
1701 Byrd Avenue, Richmond Virginia 23261-6544 (US)

(72) Inventor: Sacchetti, Peter J., 142 Fiske Street,
Manchester New Hampshire (US)

(74) Representative: Abnett, Richard Charles et al, REDDIE &
GROSE 16 Theobalds Road, London WC1X 8PL (GB)

(54) Fluid pressure sensitive construction and method of making the same.

(57) A fluid pressure sensitive construction such as an actuator comprises a housing (31A) and a flexible diaphragm (42) carried by the housing and defining a fluid chamber (43) therewith, whereby pressure differentials acting across the diaphragm cause movement thereof relative to the housing. The diaphragm (42) comprises a lamination having a polymeric layer (45) defining the side thereof facing away from the chamber (43) and a metallic layer (47) defining the side thereof facing the chamber, so that the diaphragm can provide strength, flexibility, ease of sealing to a metallic housing, and economic cost.

- 1 -

FLUID PRESSURE SENSITIVE CONSTRUCTION AND
METHOD OF MAKING THE SAME

BACKGROUND OF THE INVENTION

This invention relates to an improved fluid pressure
sensitive actuator or transducer construction, to a method of
making such a construction, and to a diaphragm for use therein.

It is known to provide a fluid pressure actuator
construction comprising a housing, and a flexible diaphragm
carried by the housing and defining a fluid chamber therewith,
whereby pressure differentials acting across the diaphragm cause
movement thereof relative to the housing for actuating purposes.
Such prior known diaphragms have been formed either entirely of
metallic containing material or entirely of polymeric containing
material.

It is also known to provide a flexible lamination having
a polymeric layer defining one side thereof and a metallic layer
of copper containing material defining the other side thereof,
such lamination being utilized in printed circuits wherein the
metallic layer is etched to define conductors on the polymeric
layer.

SUMMARY OF THE INVENTION

The present invention in its various aspects is defined
in the claims appended to this description, to which reference
should now be made.

In particular, in a preferred embodiment the flexible
diaphragm of a fluid pressure actuator construction can comprise a
lamination having a polymeric layer that provides strength and
flexibility for the diaphragm, as well as provides an environmentally inert external surface therefor, and a metallic layer
defining the other side thereof for permitting the diaphragm to
be hermetically sealed to the metallic housing means carrying
the same, so that fluid in the fluid chamber defined by the
diaphragm and the housing means cannot migrate through such
diaphragm.

- 2 -

For example, one embodiment of this invention provides a fluid pressure actuator construction comprising a housing means and a flexible diaphragm carried by the housing means and defining a fluid chamber therewith, whereby certain pressure differentials acting across the diaphragm cause movement thereof relative to the housing means for actuation purposes or the like, the diaphragm comprising a lamination having a polymeric layer defining the side thereof facing away from the chamber and a metallic layer defining the side thereof facing the chamber.

- 3 -

## BRIEF DESCRIPTION OF THE DRAWINGS

The invention will be further described by way of example with reference to the drawings, in which:

Figure 1 is a cross-sectional view illustrating a prior art fluid pressure actuator construction;

Figure 2 is a cross-sectional view illustrating another prior art fluid pressure actuator construction;

Figure 3 is a view similar to Figure 2 and illustrates an improved fluid pressure actuator construction embodying this invention;

Figure 4 is a perspective view of the diaphragm of the actuator construction of Figure 3; and

Figure 5 is an enlarged fragmentary cross-sectional view taken on line 5-5 of Figure 4.

## DESCRIPTION OF THE PREFERRED EMBODIMENTS

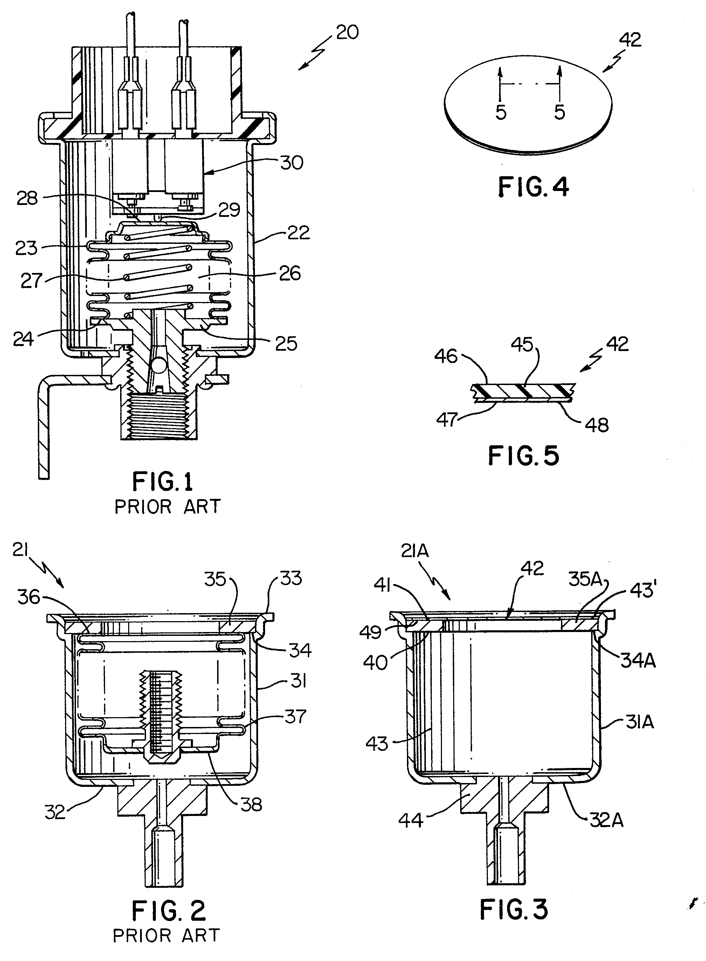

Referring now to Figures 1 and 2, typical prior known fluid pressure actuator constructions are respectively and generally indicated by the reference numerals 20 and 21. The fluid pressure actuator construction 20 of Figure 1 includes a housing 22 carrying a metallic bellows construction 23 having its open end 24 sealed to a metallic part 25 of the housing 22 to co-operate therwith in defining a fluid chamber 26. The fluid chamber 26 also contains a compression spring 27. The movable wall 28 of the bellows construction 23 is adapted to operate an actuator element 29 of an electrical switch 30 for operating the same when certain pressure differentials act across the wall 28 to cause movement thereof relative to the housing 22, in a manner well known in the art.

Similarly, the fluid pressure actuator construction 21 of Figure 2 comprises a metallic cup-shaped housing member 31 having a closed end wall 32 and an open end 33. The open end 33 defines an annular shoulder 34 against which a metallic annular washer-like member 35 is adapted to be secured. An open end 36 of a metallic bellows 37 is adapted to be secured to the washer-like member 35 while having its closed end 38 adapted to be moved

- 4 -

relative to the housing member 31 when certain pressure differentials act across the movable end 38 of the bellows construction 37, in a manner well known in the art. In this manner, the movable end or wall 38 of the bellows construction can operate any suitable actuator, such as a switch actuator element in a manner similar to device 20 of Figure 1.

While the prior known fluid pressure actuator constructions 20 and 21 each has a metallic bellows construction 23 or 37, it is to be understood that each could have a flexible diaphragm providing the actuating structure therefor in a manner well known in the art.

Reference is now made to Figure 3, in which a fluid pressure actuator construction embodying this invention is generally indicated by the reference numeral 21A and parts thereof similar to the actuator construction 21 previously described with reference to Figure 2 are indicated by like reference numerals followed by the letter "A".

As illustrated in Figure 3, it can be seen that the fluid pressure actuator construction 21A comprises the cup-shaped metallic housing member 31A carrying the annular metallic washer-like member 35A on the shoulder 34A thereof, the washer-like member 35A having opposed substantially flat parallel surfaces 40 and 41.

A flexible diaphragm embodying this invention is generally indicated by the reference numeral 42 and has its outer peripheral portion 43' secured to the side 41 of the washer-like member 35A in a manner hereinafter described to completely close the open end 33 of the cup-shaped housing member 31 and cooperates therewith to define a chamber 43. The chamber 43 can be filled with a suitable fluid through a filling fitting 44 secured to the closed end 32A of the cup-shaped housing member 31A in a manner well known in the art.

In this manner, pressure differentials being created across the diaphragm 42 cause the diaphragm 42 to move relative to the housing member 31A for actuation purposes in a manner

- 5 -

well known in the art.

The diaphragm 42 comprises a lamination as illustrated in Figures 4 and 5 that has a polymeric layer 45 defining the side 46 of the diaphragm 42 that faces away from the chamber 43 and a metallic layer 47 defining the side 48 thereof that faces the chamber 43, the polymeric layer 45 being thicker than the metallic layer 47.

In this manner, it is believed that the thicker polymeric layer 45 provides flexibility and durability to the diaphragm 42 as well as provides an environmentally inert external surface 46 for the diaphragm 42.   In contrast, the metallic layer 47 is relatively thin so as not to add rigidity to the diaphragm 42 while still being adapted to co-operate with the metallic cup-shaped housing member 31A to define the entire chamber 43 of metallic facing material so as to tend to prevent any migration of the fluid within the chamber 43 through the housing member 31A or through the diaphragm 42.   In addition, the metallic layer 47 provides means for securing the diaphragm 42 directly to the metallic member 35A such as by being secured thereto by solder as is indicated by the reference numeral 49 in Figure 3.

Thus, it can be seen that the metallic layer 47 of the diaphragm 42 provides the means for readily permitting the diaphragm 42 to be secured to the part 35A of the housing means 31A as well as defines the part of the diaphragm 42 that prevents migration of fluid from the chamber 43 to the exterior of the chamber 43 through the diaphragm 42.

The polymeric layer 45 of the diaphragm 42 of this invention can comprise a polyimide containing material such as a polyimide  sold under the trade mark "KAPTON" by the Dupont Company of Wilmington, Delaware.

The metallic layer 47 can comprise any suitable metallic containing material and it has been found that the same can comprise copper containing material that has been clad in a conventional manner to the polyimide layer 45 so as to provide an adhesiveless securement thereto which will not readily delaminate during the heating of the diaphragm 42 when the same is being soldered to the member 35A as previously described, the soldering operation producing a reflow low temperature solder joint 49 in a manner well known in the art. Preferably an annealed copper material is used which is pressure bonded onto the polymeric layer.

In this manner, it has been found that the chamber 43 of the actuator construction 21A is substantially hermetically sealed by the diaphragm 42 and the solder joint 49 whereby the actuator construction 21A is believed to be a low cost alternative to actuator constructions that utilized formed or welded metal bellows, such as the actuator constructions 20 and 21 previously described, particularly when the actuator construction is being utilized in relatively low pressure applications.

In certain tests with the fluid pressure actuator construction 21A of Figure 3 the copper containing layer 47 of the diaphragm 42 was approximately 0.00048 of an inch (0.012mm) thick and the polyimide layer 45 of the diaphragm was approximately 0.003 of an inch (0.075mm) thick or 0.005 of an inch (0.125mm) thick. No leaks through such diaphragm 42 were detected.

Many variants may be made within the scope of the claims and in particular the construction may be used as a transducer in a pressure sensing system rather than strictly as an actuator.

0100221

- 7 -

<u>CLAIMS</u>

1.      A fluid pressure sensitive construction comprising housing means (31A), and a flexible diaphragm (42) carried by said housing means and defining a fluid chamber (43) therewith, whereby certain pressure differentials acting across said diaphragm cause movement thereof relative to said housing means, characterised in that said diaphragm comprises a lamination having a polymeric layer (45) defining the side thereof facing away from said chamber (43) and a metallic layer (47) defining the side thereof facing said chamber.

2.      A construction according to claim 1, wherein said housing means has metallic means (31A, 35A) co-operating with said metallic layer (47) of said diaphragm (42) so that said chamber (43) is defined substantially solely by said metallic means and said metallic layer of said diaphragm.

3.      A construction according to claim 2, wherein said metallic layer (47) of said diaphragm is secured to said metallic means (35A) of said housing means with securing means.

4.      A construction according to claim 3, wherein said securing means comprises solder.

5.      A construction according to claim 4, wherein said metallic means of said housing means includes an annular flange means (35A), said diaphragm (42) being circular and having an outer peripheral portion secured to said annular flange means by said solder.

6.      A construction according to claim 5, wherein said metallic means of said housing means includes a cup-shaped metallic member (31A) having an open end closed by said diaphragm (42).

7.      A flexible pressure-sensitive diaphragm construction, characterised in that the diaphragm (42) comprises a polymeric layer (45) laminated with a metallic layer (47).

8.      A construction according to any preceding claim, wherein said polymeric layer (45) is thicker than said metallic layer (47).

9.      A construction according to any preceding claim, wherein said polymeric layer (45) comprises a layer of polyimide containing material.

10.     A construction according to any preceding claim, wherein said metallic layer (47) comprises a layer of copper containing material.

11.     A construction according to claim 10, wherein said layer of copper containing material (47) has been clad on said polymeric layer (45).

12.     A method of making a fluid pressure sensitive construction, comprising the steps of:  providing a housing means and a flexible diaphragm, and causing said diaphragm to be carried by said housing means and define a fluid chamber therewith, whereby certain pressure differentials acting across said diaphragm cause movement thereof relative to said housing means for actuation purposes or the like, characterised by the step of forming said diaphragm to comprise a lamination having a polymeric layer defining the side thereof facing away from said chamber and a metallic layer defining the side thereof facing said chamber.

0100221

1 / 1

FIG.1
PRIOR ART

FIG.4

FIG.5

FIG. 2
PRIOR ART

FIG.3